# EUROPÄISCHE PATENTSCHRIFT

(11) **EP 1 718 402 B1**
(45) Veröffentlichungstag und Bekanntmachung des Hinweises auf die Patenterteilung: **13.08.2008**
(21) Anmeldenummer: 05707247.2
(22) Anmeldetag: 08.02.2005
(51) Int. Cl.: B01F 5/00, B01F 15/00, B01F 13/00, F16K 15/02, F16K 17/06, F16K 15/06

(54) **MIKROMISCHER**
MICROMIXER
MICRO-MELANGEUR

(30) Priorität: 17.02.2004 EP 04003471; 27.01.2005 DE 102005003965
(43) Veröffentlichungstag der Anmeldung: 08.11.2006
(73) Patentinhaber: Ehrfeld Mikrotechnik BTS GmbH, 55234 Wendelsheim (DE)
(72) Erfinder: EHRFELD, Wolfgang, 55134 Mainz (DE); HERBSTRITT, Frank, 55232 Alzey (DE); MERKEL, Till, 89073 Ulm (DE)
(74) Vertreter: Lütjens, Henning
(86) Internationale Anmeldenummer: PCT/EP2005/001227
(87) Internationale Veröffentlichungsnummer: WO 2005/079964

(56) Entgegenhaltungen:
- EP-A- 0 603 844
- WO-A-20/04012864
- DE-A- 19 707 165
- FR-A- 1 161 144
- US-A- 3 540 474
- US-A- 4 106 522
- US-A1- 2002 078 993
- US-A1- 2002 081 222
- US-A1- 2003 075 101
- US-A1- 2003 107 946

## Beschreibung

Die Erfindung betrifft einen Mikromischer zum Vermischen von mindestens zwei unter Bildung von Ausfällungen oder Suspensionen reagierenden Fluiden.

Durch den Einsatz mikrostrukturierter Bauteile in Apparaten zur Vermischung von Fluiden werden Vorteile bei der Produktqualität erzielt sowie Mischzeiten und Größe der erforderlichen Apparaturen im Vergleich zu herkömmlichen Aufbauten verringert. Ein wesentliches Merkmal mikrostrukturierter. Bauteile sind die kleinen Abmessungen der Fluidkanäle, die typischerweise im Bereich zwischen 10 und 5.000 µm angesiedelt sind. Aus diesem Grund können beispielsweise mit Multilaminationsmischern feine Fluidlamellen erzeugt werden, zwischen denen aufgrund ihrer geringen Dicke ein schneller Stoffaustausch durch Diffusion erfolgen kann. Die kleinen Abmessungen der durchströmten Querschnitte verlangen allerdings auch besondere Maßnahmen, um sie im Betrieb gegen Ablagerungen und Verstopfungen zu schützen. So werden beispielsweise im Zulauf derartiger Bauteile Partikelfilter eingesetzt, wobei sich die Auswahl der Trenngrenze an den Abmessungen der Mikrostruktur orientiert.

Außer durch Partikel, die über die Zulaufkanäle für die einströmenden Medien in einen Mikromischer gelangen können, besteht auch aufgrund von chemisch-physikalischen Prozessen, die in den Bauteilen etwa nach einer Vermischung ablaufen, die Gefahr von Ablagerungen und Verstopfungen. So können feste Produkte zum Beispiel durch Fällung in Folge einer Neutralisationsreaktion; durch Überschreiten des Löslichkeitsprodukts oder durch Kristallisation des Reaktionsprodukts bei einer Umsetzung organischer oder anorganischer Verbindungen gebildet werden. Aus der DE 101 48 615 A1 ist ein Verfahren zur Durchführung chemischer Prozesse bekannt, bei denen mindestens zwei unter Ausbildung von Niederschlägen oder Suspensionen reagierende Fluide in einem Fluidkanäle aufweisenden Mikromischer zusammengeführt werden. Um Verstopfungen des Mikromischers zu verhindern, werden die mindestens zwei Fluide durch ein weiteres Trennfluid voneinander getrennt in eine Mischkammer oder eine Reaktionsstrecke eingeleitet. Eine vorzeitige Reaktion der Fluide wird dadurch vermieden und in einen unkritischen Bereich einer Mischervorrichtung verlagert. Eine weitere Möglichkeit, den Ablagerungen und Verstopfungen in den Mikrostrukturen vorzubeugen, wird in der DE 202 18 972 U1 beschrieben. Dort werden die Bauteile eines statischen Laminationsmikrovermischers so konstruiert, dass sie leicht zugänglich und leicht zu reinigen sind. Auf sehr einfache Weise können Suspensionen in mikrostrukturierten Bauteilen dann unter Ausschluss von Verstopfungen noch gehandhabt werden, wenn die Abmessungen der Mikrostrukturen deutlich größer sind als die auftretenden maximalen Partikelabmessungen. In der DE 100 31 558 A1 wird daher im Zusammenhang mit Verfahren zur Konditionierung organische Pigmente empfohlen, die mikrostrukturierten Bereiche innerhalb eines Reaktors so zu dimensionieren, dass die kleinste lichte Weite der Mikrostrukturen in vorteilhafter Weise ungefähr zehnmal größer als der Durchmesser der größten Teilchen ist. Dadurch vergrößern sich jedoch auch die charakteristischen Abmessungen der Bauteile, und man spricht häufig nicht mehr von Mikro-, sondern von Minireaktoren. Auch wenn durch diese Maßnahmen Abhilfe bezüglich der Verstopfungsgefahr geschaffen wird, so verringert sich dadurch häufig auch der Nutzen, den die Mikrostrukturen für die Prozessführung und Produktqualität erbringen. Auf jeden Fall sollten zur Vermeidung von Ablagerungen in der Auslaufzone eines Mischers oder Reaktors Totvolumina und scharfe Umlenkungen in der Wandung vermieden werden. Kommt es dennoch zu Verstopfungen, so können aktive Reinigungsmaßnahmen Abhilfe schaffen. In der DE 101 43 189 A1 werden ein Verfahren und eine Vorrichtung zur prozessbegleitenden Reinigung von Mikro- und Minireaktoren beschrieben. Dabei wird der Mikro- bzw. Minireaktor durch eine kontrollierte Druckerhöhung mit anschließender plötzlicher Entspannung oder durch einen Gasdruckstoß zyklisch oder mit Hilfe einer Regelung gereinigt. So wird Wandbelag, der sich beispielsweise aus an der chemischen Synthese oder dem physikalischen Prozess beteiligten Feststoffen gebildet hat, nahezu vollständig abgetragen. Ergänzend oder alternativ zu solchen Reinigungsverfahren sind auch besondere konstruktive Maßnahmen und spezielle Arten der Prozessführung bekannt, welche die Ausbildung von Wandbelägen und die Verstopfung der mikrostrukturierten Bauteile verhindern. Wie bereits oben erwähnt, ist aus der DE 101 48 615 A1 der Einsatz eines Trennfluids bekannt. Das Trennfluid kann allerdings die Reaktion nachteilig beeinflussen, indem es zu einer Verdünnung einer einphasigen Mischung führt und die Übersättigung für die Fällungsreaktion und damit die Ausbeute der Umsetzung verringert, Außerdem muss ein solches Trennfluid anschließend vom Produktstrom abgetrennt werden. In der DE 101 19 718 A1 wird ein Aufbau zur Herstellung inhalierfähiger Arzneistoffe beschrieben, der aus einem Mikromischer, einem Segmenter und einer anschließenden Verweilstrecke besteht. Im Mikromischers werden beispielsweise zwei flüssige Komponenten vermischt, die im Segmenter in einzelne Einheiten aufgeteilt werden, wobei die einzelnen Einheiten durch eine andere Phase voneinander getrennt werden. Dieses zweiphasige system wird dann in einer Verweilstrecke aufgeheizt, um die Reaktion einzuleiten, die zur Feststoffbildung führt. Die Segmentierung der reagierenden Phase verhindert dabei die Bildung größerer Agglomerate. Des Weiteren ist es bekannt, Strömungseffekte auszunutzen, um kleine Feststoffeinheiten zu erzeugen. So wird in der EP 1 165 224 B1 beschrieben, wie mindestens zwei flüssige Medien aus Mikrodüsen in dünnem Strahl unter hohem Druck aufeinander geschossen werden. Im Kollisionspunkt werden dadurch feine Tröpfchen erzeugt, in denen dann physikalischchemische Umwandlungen ablaufen und deren Größe auch die Größe der festen Reaktionsprodukte bestimmt. Diese werden durch einen Hilfsstrom abgeführt, das kann ein Gas oder eine Flüssigkeit sein, die anschließend abgetrennt werden müssen. In der DE 198 51 253 A1 wird die Herstellung von Bisphenol A unter Verwendung einer kontrollierten Turbulenz beschrieben. Die Turbulenz wird durch eine geeignete Strömungsführung erzeugt, und mit ihr lassen sich Form und Größe der Teilchen einstellen. Die EP 0 913 187 B1 beschreibt ein Verfahren zur kontinuierlichen Polymerisation mit einem Mikromischer für Reaktionsflüssigkeiten. Zur Herstellung von Polymeren werden dort zwei oder mehr Monomere aus Düsen ausgespritzt und in einem oder mehreren Schritten zusammen geführt. Die Mischungen werden dann mittels Druck aus der Mischkammer geleitet. Der Punkt des Aufeinanderprallens zweier Strahlen von Fluiden liegt in einiger Entfernung von den Düsen, mit denen die Fluide im Winkel aufeinander gespritzt werden, so dass eine Verstopfung der Düsen ausgeschlossen werden kann. Die WO 01/62374 A2 beschreibt ein Verfahren zur Herstellung von Nanosuspensionen. Dabei treten die Fluide nach ihrer Vermischung in einer Mischkammer in eine Düse ein, die sie über einen Auslaufkanal verlassen. Die Vermischung wird durch Turbulenzen erzielt, so dass Ablagerungen und Verstopfungen der Mikrostrukturen auf diese Weise vorgebeugt wird. Dokument DE-A-197 07 165 offenbart einen Mischer gemäß dem Oberbegriff des Anspruchs 1. Zusammenfassend ist festzustellen, dass die bisher verwendeten Lösungen gegen Ablagerungen und Verstopfungen der Mikrostrukturen in den folgenden Maßnahmen bestehen: Die Bauteile der Mikrostrukturen werde so konstruiert, dass sie gut zugänglich und leicht zu reinigen sind, auch werden sie deutlich größer als die Partikel gebaut, darüber hinaus können Verweilstrecken und zusätzliche Kanäle für Hilfsströme vorgesehen sein. Die Verfahren zur Vermeidung von Ablagerungen und Verstopfungen an Mikroreaktoren sehen eine prozessbegleitende Reinigung vor, geeignete Strömungsführungen, Vermischungen fern der Zuleitungskanäle oder Erzeugung von Turbulenzen. Allen Maßnahmen ist gemein, dass sie die Effizienz der Mikroreaktoren beeinträchtigen oder großen zusätzlichen Aufwand bedeuten.

Aufgabe der vorliegenden Erfindung ist es, einen Mikromischer zum Vermischen von mindestens zwei Fluiden zur Verfügung zu stellen, der eine schnelle und effiziente Vermischung der Fluide gewährleistet und gleichzeitig gute Beständigkeit gegenüber unerwünschten. Ablagerungen und Verstopfungen in der Mikrostrukturen aufweist.

Die Aufgabe wird überraschenderweise durch den erfindungsgemäßen Mikromischer gelöst.

Gegenstand der Erfindung sind daher Mikromischer zum Vermischen von mindestens zwei unter Bildung von Ausfällungen oder Suspensionen reagierenden Fluiden mit den Merkmalen des Anspruchs 1.

Der erfindungsgemäße Mikromischer zum Vermischen von mindestens zwei unter Bildung von Ausfällungen oder Suspensionen reagierenden Fluiden weist einen ersten Kanal für die Zufuhr eines ersten Teilstroms und einen zweiten Kanal für die Zufuhr eines zweiten Teilstroms auf. Beide Kanäle münden vorzugsweise in schmalen Eintrittsspalten in eine Misch- und Reaktionszone und verlassen diese über einen Auslasskanal. Zwischen der Misch- und Reaktionszone und mindestens einem Kanal für die Zufuhr, eines Teilstroms ist eine Rückströmsperre angeordnet. Als Vorteil des erfindungsgemäßen Mikromischers erweist es sich, dass in der Misch- und Reaktionszone keine Rückströmungen auftreten. Dadurch werden die damit verbundenen Fällungsreaktionen in den Einlaufbereichen der Misch- und Reaktionszone vermieden. In der Misch- und Reaktionszone erfolg die primäre Keimbildung für die später erfolgenden Ausfällungen und Kristallisationsprozesse. Zur Herstellung fein disperser Feststoffe, wie sie in Ausfällung oder Suspensionen auftreten, müssen hohe Keimbildungsraten erzielt werden. In großtechnischen Prozessen werde daher in entsprechenden Misch- und Reaktionszonen hohe Schergeschwindigkeiten durch schnelle Strömungen oder intensives Rühren realisiert. Hohe Keimbildungsraten mit Hilfe mikrostrukturierter Bauteile lassen sich erzielen, wenn feine Fluidstrahlen in ein strömendes Fluid injiziert werden. Die zugeführten Fluide können selbst bereits partikelhaltig sein.

Vorteilhafte Ausführungsformen des Mikromischers sind Gegenstand der Unteransprüche.

Ein gleichmäßiges Wachstum gebildeter Keime zu einheitlicher Partikelgröße setzt voraus, dass sich der Misch- und Reaktionszone ein gleichförmiges Strömungsfeld mit niedrigen Geschwindigkeiten abschließt. Dies wird mit Vorteil realisiert durch einen Auslasskanal mit einer glatten und sich aufweitenden Geometrie.

Die Rückströmsperre des Mikromischers ist vorzugsweise als Rückschlagventil oder als Membrananordnung ausgebildet. Die Vorspannung der Feder des Rückschlagventils kann mit Hilfe von mechanischen Mitteln eingestellt werden. In einer besonders vorteilhaften Ausführung kann die Federvorspannung und/oder die Federkonstante und damit der Ansprechdruck bzw. das Öffnungsverhalten des Rückschlagventils während des Betriebs des Mischers von außen eingestellt werden. Insbesondere bei einer Einbindung des Rückschlagventils in einen externen Regelkreis erweist sich die Verwendung eines elektrischen, pneumatischen, hydraulischen oder elektromagnetischen Antriebs für das Rückschlagventil als vorteilhaft.

In einer weiteren vorteilhaften Ausführungsform des Mischers, kann die Breite wenigstens eines der Eintrittsspalte und/oder die charakteristische Dimension der Misch- und Reaktionszone während des Betriebs des Mischers kontinuierlich oder stufenweise eingestellt werden. Die Einstellung dieser Größen kann dabei durch mechanischen, pneumatischen, hydraulischen, piezoelektrischen, elektrostatischen oder elektromagnetischen Antrieb erfolgen. In einer besonders vorteilhaften Ausführung des Mischers können diese Größen darüber hinaus als Stellgrößen in einen Regelkreis eingebunden werden.

Als Regelgrößen für die Einstellung des Ansprechdrucks bzw. Öffnungsverhaltens des Rückschlagventils, der Breite wenigstens einer der Eintrittsspalte und/oder der charakteristischen Dimension der Misch- und Reaktionszone werden bevorzugt chemische oder physikalische Eigenschaften des Misch- bzw. Reaktionsprodukts, insbesondere solche, die sich durch eine schnelle online-Messung ermitteln lassen, wie z.B. Temperatur, Farbe, Lichtstreu- oder Absorptionsverhalten, pH-Wert oder elektrische Leitfähigkeit, herangezogen.

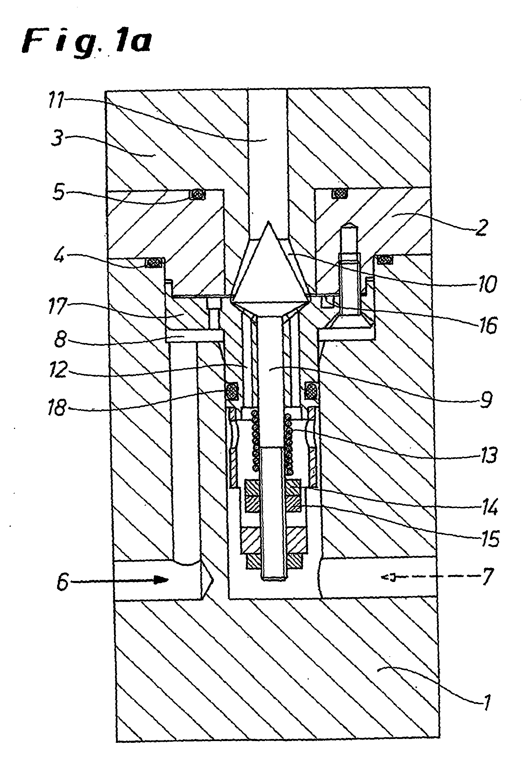

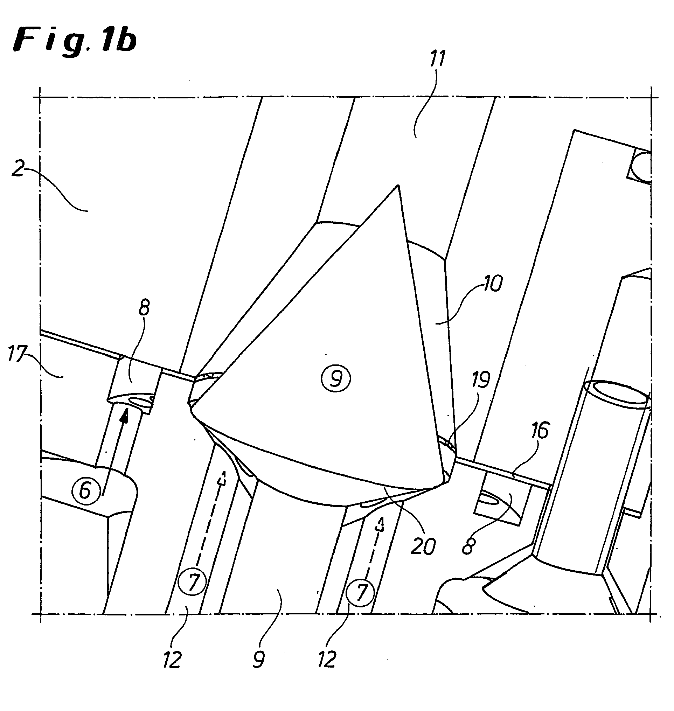

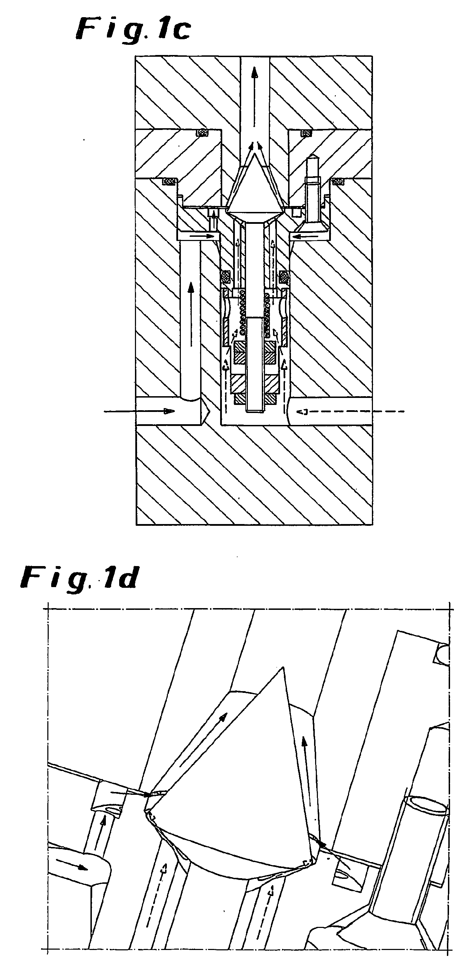

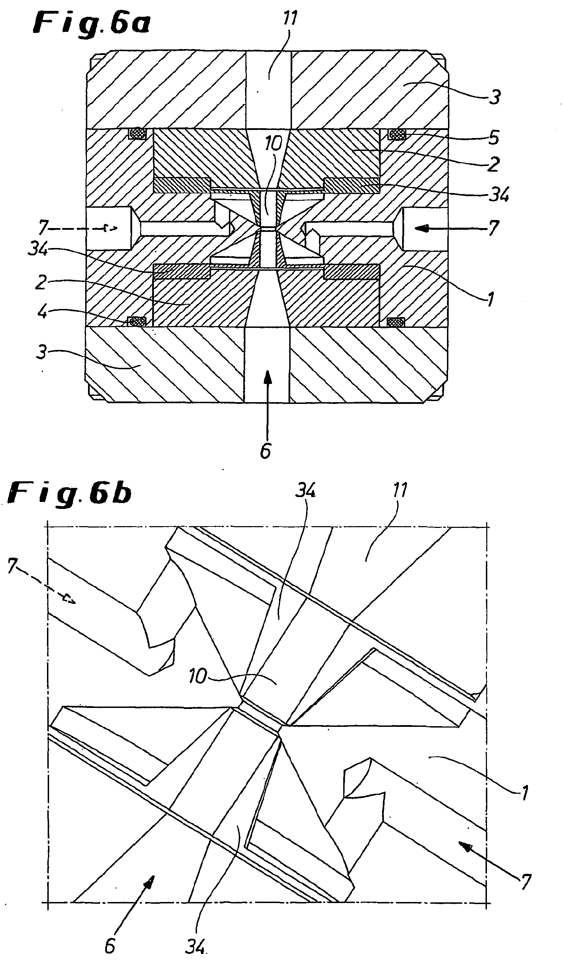

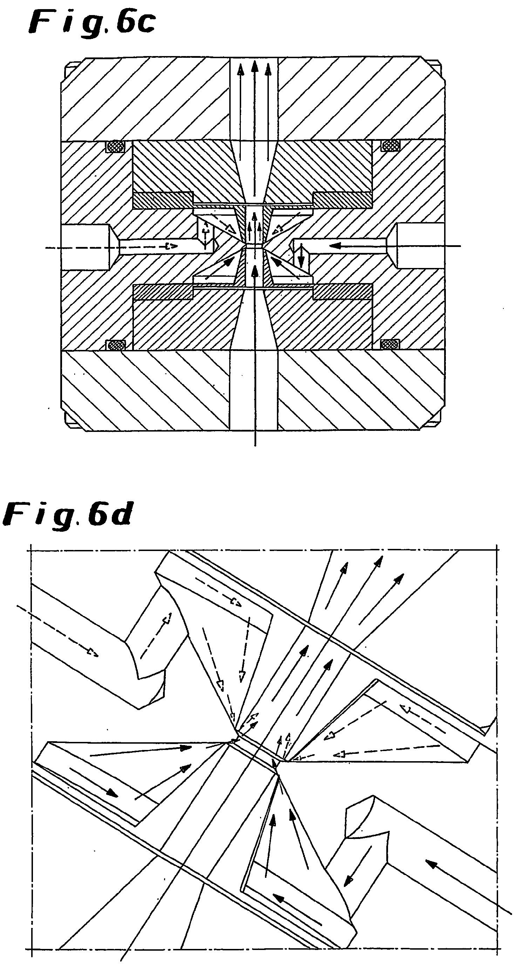

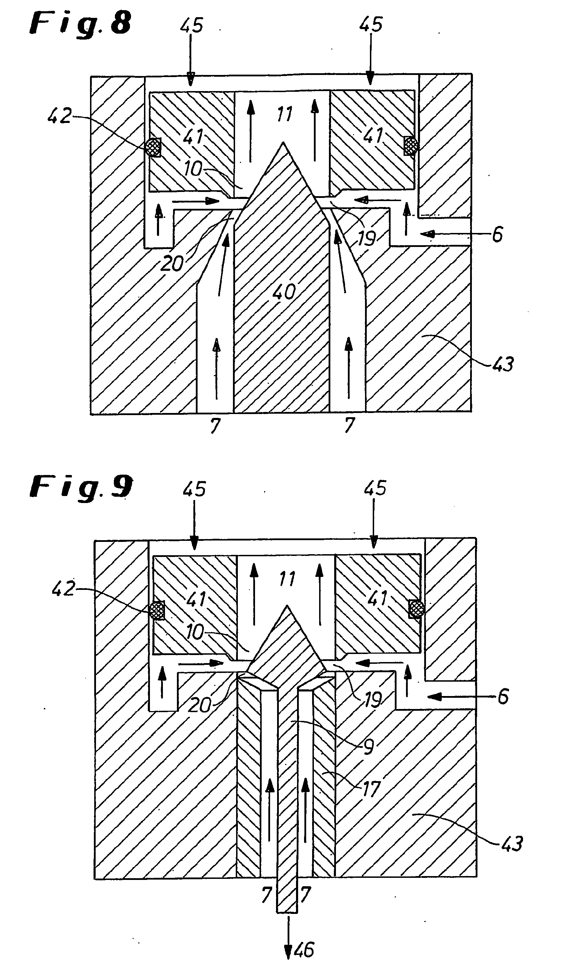

Die Eintrittsspalte für die verschiedenen Teilströme können linear - dann vorzugsweise parallele oder radial, oder gekrümmt - dann vorzugsweise ringförmig konzentrisch oder axial in Folge - angeordnet sein. Linear angeordnete Eintrittsspalte eignen sich in besonders vorteilhafter Weise, um erfindungsgemäße Mikromischer für hohe Volumenströme; z.B. oberhalb einiger 100 L/h zu realisieren. Im Fall einer ebenfalls vorteilhaften ringförmigen konzentrischen Anordnung kann die Rückströmsperre sowohl Bestandteil des inneren und/oder des äußeren Kanals sein. Für den Fall, dass das Rückschlagventil Bestandteils des inneren Kanals ist, ist die Funktionsweise des Mischers in den Figuren 1 bis 5 beschrieben. Im Fall einer weiteren vorteilhaften Ausführung mit zwei ringförmigen, mit Membranventilen als Rückströmsperren versehenen Eintrittsspalten in axialer Anordnung ist die Funktionsweise des Mischers in Figur 6 beschrieben. Der ebenfalls vorteilhafte Fall eines im äußeren Eintrittsspalt ausgebildeten Rückschlagventils ist in Figur 8 dargestellt.

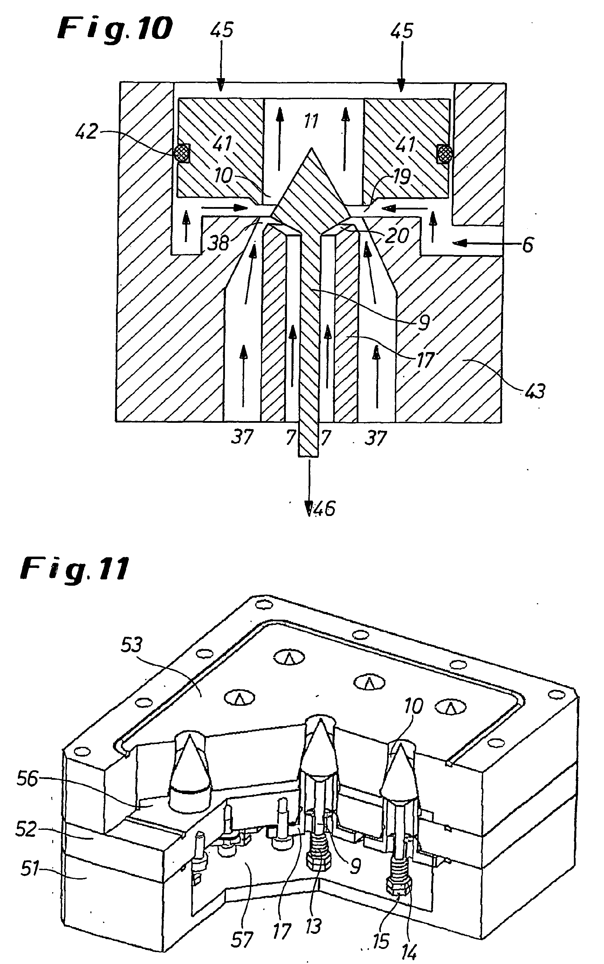

In einer weiteren bevorzugten Ausführungsform der Erfindung besteht der Mikromischer aus mindestens einem innen liegenden als auch einem außen liegenden Rückschlagventil, siehe Figur 9. Die in Figur 10 dargestellte Ausführungsform der Erfindung ermöglicht dabei zusätzlich das Mischen von mehr als zwei Komponenten.

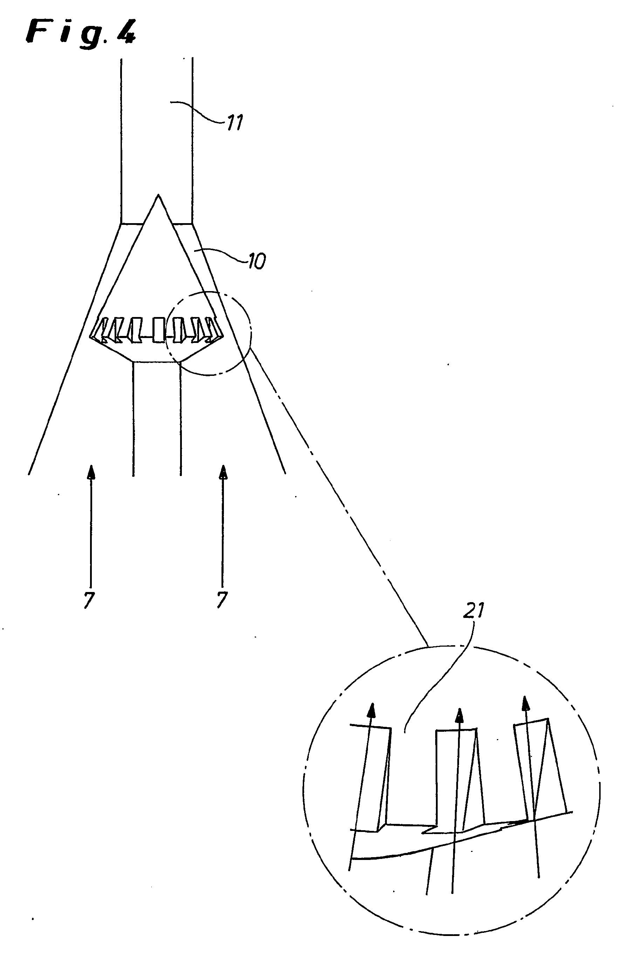

Die in die Misch- und Reaktionszone zulaufenden Teilströme können in vielfältiger Weise durch eine entsprechende Gestaltung der Strömungsführung aufgefächert werden, wodurch die Mischgeschwindigkeit und damit die Keimbildungsrate erhöht wird. In einer bevorzugten Ausführungsform der Erfindung, wie sie in den Figuren 1d, 2b, 3a und 3b dargestellt sind, werden mit Schlitzen versehene Platten, z.B. mit radialen Schlitzen versehene Platten (16), eingelegt, die den Teilstrom bzw. die Teilströme in eine Vielzahl von Teilstrahlen aufspalten. In einer weiteren Ausführungsform der Erfindung werden bestimmte Strukturen, wie z.B. eine Riffelung auf die Kanalwände oder, wie in Figur 4 dargestellt, unmittelbar im Einströmbereich des jeweiligen Teilstroms auf den Rand des Rückschlagventils aufgebracht.

In einer weiteren vorteilhaften Ausführung des erfindungsgemäßen Mikromischers ist die Rückstromsperre elektrisch, pneumatisch, hydraulisch oder elektromagnetisch ansteuerbar. Besonders vorteilhaft ist dabei eine Ausführung, bei der die Rückstromsperre durch einen äußeren Erreger mit hoher Frequenz periodisch bewegt werden kann. Besonders bevorzugt ist hier Ausführung als Rückschlagventil mit einem leichten Ventilteller und periodischer Erregung durch einen Piezoschwinger oder Elektromagneten. Als Erregerfrequenzen sind hierbei Frequenzen im Mega-Hertz-Bereich besonders bevorzugt.

Für den Einsatz des erfindungsgemäßen Mischers bei hohen Volumendurchsätzen der eingehenden Teilströme ist bevorzugt eine Mischereinheit bestehend aus mehreren parallel betriebenen identischen Anordnungen von Eintrittsspalten mit jeweils separaten Rückstromsperren und Mischzonen in einem gemeinsamen Gehäuse und mit gemeinsamer Fluidzuführung einzusetzen, wobei die Fluidzuführung zu den einzelnen Anordnungen bevorzugt derart gestaltet und die Öffnungsdrücke der einzelnen Rückstromsperren, derart aufeinander abgestimmt sind, dass in allen Mischzonen der Mischereinheit im Betrieb dieselben Mischungs- und Strömungsverhältnisse herrschen.

Die erfindungsgemäßen Mikromischer werden bevorzugt durch Verfahren der Feinwerktechnik und Mikrofertigungstechnik hergestellt. Dies umfasst alle gängigen Methoden, wie z.B. die spanabhebende Bearbeitung, Funkenerosion oder Materialbearbeitung mit Laserstrahlung. Wird ein Rückschlagventil als Rückströmsperre eingesetzt, so wird dessen Dichtwirkung in vorteilhafter Weise durch Ausstattung mit einer Elastomerdichtung erreicht. In einer anderen vorteilhaften Ausführung wird die Dichtwirkung des Rückschlagventils durch Einschleifen des Ventilkonus in seinen Sitz erreicht. Diese Form der Dichtung eignet sich in besonders vorteilhafter Weise, wenn der Mischer bei hohen Temperaturen eingesetzt werden soll.

Die Mikromischer können dabei vorteilhaft aus den in der Verfahrenstechnik gängigen Materialien wie Edelstählen, Nickelbasis-Legierungen, Titan. oder Tantal gefertigt werden. Insbesondere bei Einsatz der Mikromischer unter hohen Temperaturen oder mit korrosiven Medien sind jedoch auch bevorzugt keramische Materialien wie z.B. Aluminiumoxid, Zirkonoxid, Siliziumnitrid, Aluminiumnitrid oder Siliziumcarbid einzusetzen.

Die erfindungsgemäßen Mikroreaktoren werden dabei bevorzugt für Kristallisations- und Fällungsreaktionen eingesetzt.

Wenn in den Mikromischer Substanzen eindringen, die spontan kristallisieren, ist es sinnvoll, die Rückströmsperren mit Reinigungsstiften zu versehen, die vorzugsweise eine nadelförmige Spitze aufweisen. Die Reinigungsstifte befreien die Mikrostrukturen bei jedem Öffnungs- und Schließvorgang von etwaigen Ablagerungen. Die Reinigungsstifte können entweder entgegen der Strömungsrichtung in eine betreffende Austrittsöffnung eingeführt werden oder in Strömungsrichtung. Werden etwaige Ablagerungen durch die Reinigungsstifte in Strömungsrichtung herausgedrückt, so erweist sich das als besonders vorteilhaft. Die Mikrostrukturen können auch durch kurzzeitiges Betätigen der Rückströmsperren im laufenden Betrieb mit Hilfe der Reinigungsstifte von Ablagerungen befreit werden. Der Betrieb muss dafür nicht unterbrochen werden. Das kurzzeitige Schließen zu Reinigungszwecken kann manuell, über gezielt aufgebrachte Druckschwankungen oder über einen externen Regelkreis ausgelöst werden.

Die Zuführung der Teilströme in einen kreis- oder ringförmigen Querschnitt kann unter hohem Druck und aus feinen Düsen erfolgen. Da Kristallisationsprozesse in verschiedenen Phasen ablaufen, die durch die Schergradienten beeinflusst werden, ist das Aufeinandertreffen der Teilströme unter verschiedenen Winkeln vorteilhaft, um unterschiedliche Geschwindigkeitsgradienten zwischen den Teilströmen zu realisieren. Die Teilströme treffen bevorzugt in einem Winkel zwischen 5 und 175° aufeinander. Treffen die Teilströme in spitzen Winkeln aufeinander, so weist eine Hauptkomponente ihre Bewegung in Ausströmrichtung, so dass sich die Relativgeschwindigkeiten der einzelnen Teilströme langsam angleichen. Auf diese Weise können am Einspritzpunkt hohe Schergradienten realisiert werden, um die Keimbildung zu begünstigen. Die nachfolgende Abnahme der Relativgeschwindigkeiten wirkt sich günstig auf das Kristallwachstum aus. Bei einer Einspritzung eines Teilstroms im rechten Winkel können höhere Geschwindigkeitsgradienten in der Nähe der Dosierstelle realisiert werden, woraus eine hohe Keimbildungsrate resultiert. Anschließend kann ein erster Teilstrom durch einen zweiten Teilstrom in Ausströmrichtung bewegt werden, wobei sich die Relativgeschwindigkeit zwischen den Teilströmen verringert. Die Keimbildungsrate lässt sich weiter steigern, wenn die Einspritzung unter einem stumpfen Winkel erfolgt, beilspielsweise 175°. In diesem Fall treten die größten Geschwindigkeitsgradienten an der Einspritzstelle auf.

Kristallisations- und Fällungsprodukte bedürfen in vielen Fällen einer weiteren Behandlung, um beispielsweise den pH-Wert im Produktstrom durch Nachdosierung einer Säure oder einer Lauge zu regeln oder mit Hilfe von Inhibitoren oder Stabilisatoren die Kristallgröße zu steuern. Oft sind dafür weitere Dosierstellen erforderlich. Diese können in einem oder in mehreren hintereinander geschalteten Apparaturen realisiert werden. In diesem Zusammenhang kann es auch notwendig sein, die zuströmenden Medien, ein gesamtes Bauteil, die Misch- und Reaktionszone oder weitere sich anschließende Bauteile gezielt zu temperieren.

Eine Beeinflussung der Partikelgröße der gebildeten Kristallisations- oder Fällungsprodukte kann erfolgen, indem der Querschnitt des Auslasskanals regelmäßig oder unregelmäßig gestaltet wird. Aufgrund ihrer gegenüber dem Medium unterschiedlichen Dichte bewegen sich die Fällungsprodukte meist mit geringerer Geschwindigkeit als die strömende Flüssigkeit. An einer Engstelle kommt es zu einer Beschleunigung der Strömung, an einer Erweiterung zu einer Beruhigung der Strömung. Auf diese Weise können gezielt Geschwindigkeitsgradienten aufgeprägt werden, die eine Zerschlagung großer Aggregate oder deren Vergrößerung bewirken.

Fällungs- und Kristallisationsprodukte neigen in Abhängigkeit von ihren Eigenschaften, der Wandrauhigkeit und den Strömungsbedingungen zur Ablagerung an den Wandungen des Mikromischers. Es erweist sich daher als günstig, die ausströmenden Produkte im Auslasskanal in einen Mantelstrahl einzuschließen, der zwischen der Wandung des Auslasskanals und dem ausströmenden Produkt als geschlossener Film zugeleitet wird.

In einer anderen vorteilhaften Ausführungsform des Mikromischers ist dieser im Bereich des Auslasskanals aus einem gegen Anhaftungen besonders resistenten Material, wie z.B. PTFE, gefertigt, die Wandung des Auslasskanals ist mit einem solchen Material beschichtet und/oder die Oberfläche dieser Wandung ist ,z.B. durch Einsatz eines Politur oder Elektropoliturverfahrens; besonders glatt ausgeführt.

Bei der Erzeugung von Partikeln oder Nanopartikeln ist vorzugsweise wenigstens einer der dem Mischer zugeführten Teilströme eine Flüssigkeit, Gas, ein kondensiertes Gas, ein überkritisches Lösungsmittel, ein Nebel, ein Gas mit festen, gegebenenfalls katalytisch aktiven Bestandteilen oder eine Emulsion, oder ein sich infolge der in der Mischzone stattfindenden Prozesse im Mischer bildendes Medium.

Bei den Fällungsreaktionen kann die Reaktion beispielsweise durch die Zufuhr eines weiteren Stroms unterbrochen werden oder es können weitere Schichten anderer Feststoffe auf die durch Fällung erzeugten Partikel aufgebracht werden. Auf diese Weise eignet sich der Mischer u.a. vorteilhaft zur Erzeugung von Partikeln bzw. Nanopartikeln mit mehreren, in konzentrischer Abfolge angeordneten' Schichten aus unterschiedlichen Substanzen. Zur Beeinflussung der Teilchengröße sowie zwecks Überführung der erzeugten Partikel in eine andere fluide Phase können ferner oberflächenaktive Substanzen zum Produktstrom zugeführt werden.

Der erfindungsgemäße Mischer ermöglicht zudem die Herstellung von Nanopartikeln in der Gasphase, wobei wenigstens einer der zugeführten Teilströme bereits fein verteilte Partikel wie z.B. Nanopartikel mit katalytischer Wirkung enthalten kann. Auf diese Weise kann der Mischer z.B. vorteilhaft zur Vermischung von mit katalytisch aktiven Nanopartikeln versetzten gasförmigen Kohlenwasserstoffen und Ammoniakgas verwendet werden, um durch chemische Umsetzung des so erzeugten Gemischs Kohlenstoff-Nanoröhrehen zu erzeugen.

Ferner ist mit dem Mischer vorteilhaft die In-Situ-Herstellung von Emulsionen möglich, welche somit auch dann für die Durchführung von Fällungs- und Kristallisationsreaktionen sowie für die Herstellung von Nanopartikeln genutzt werden können, wenn sie sehr instabil sind.

Eine weitere vorteilhafte Verwendung des Mischers besteht in der Fällung bzw. Kristallisation von Partikeln unter Verwendung überkritischer Lösungsmittel sowie hoch komprimierter oder kondensierter Gase, da der Mikromischer in besonders vorteilhafter Weise das Arbeiten bei hohen Drücken ermöglicht. Im Falle einer solchen Verwendung kann das Mischungsprodukt stromabwärts hinter dem Mischer auf vorteilhafte Weise durch adiabatische Entspannung des Trägermediums abgekühlt werden. Eine solche Abkühlung kann sehr schnell erfolgen und damit in vorteilhafter Weise eine schnelle Keimbildung einleiten oder aber sehr kurz nach dem Einsetzen des Partikelwachstums die chemische Reaktion bzw. ein weiteres Partikelwachstum stoppen.

Diese Verwendungen sind ebenfalls Gegenstand der Erfindung.

Für komplexere, z.B. mehrstufige Reaktionen kann der erfindungsgemäße Mischer auch mit weiteren Bauelementen kombiniert werden, die zum Aufbau eines Mikroreaktionssystems notwendig sind, wie z.B. Wärmetauscher, elektrische Heizmodule (27), thermische Isolatoren (25), weitere durchströmbare Dosierstellen (26) bzw. Mischer, wie z.B. Mantelstrommischer, Steuerungseinheiten etc. sowie Messeinrichtungen, z.B. zur Ermittlung von Temperaturen, Druck, pH-Wert, elektrischen oder optischen Eigenschaften der durchströmenden Substanzen. Insbesondere Stromabwärts des Mikromischers sind dabei bevorzugt solche Komponenten einzusetzen, die nicht durch die im Mischer erzeugten Partikel verstopfen oder sonst in ihrer Funktion beeinträchtigt werden und/oder sich mit geringem Aufwand demontieren und reinigen lassen.

Stromabwärts hinter dem Mischer angeordnete Dosierstellen können auch zur Temperierung des Produktstroms eingesetzt werden, indem sie diesem ein geeignet temperiertes Fluid zuführen.

Der erfindungsgemäße Mikromischer wird anhand der folgenden Figuren beispielhaft erläutert.

Es zeigen:
- Figur 1a: einen erfindungsgemäßen Mikromischer, insbesondere einen Ventilmischer, mit Rückschlagventil im Längsschnitt,
- Figur 1b: eine vergrößerte Ansicht des Mikromischers der Figur 1a auf die Umgebung der Misch- und Reaktionszone,
- Figur 1c: die Strömungsverläufe im Mikromischer aus Figur 1a,
- Figur 1d: die Strömungsverläufe in der vergrößerten Ansicht der Figur 1b,
- Figur 2a: eine Abstandsscheibe zur Einstellung der Höhe des Eintrittsspalts für den ersten Teilstrom,
- Figur 2b: eine Abstandsscheibe mit mikrostrukturierter Ausgestaltung,
- Figur 3a: eine perspektivische Ansicht auf die Misch- und Reaktionszone des Mikromischers mit Rückschlagventil,
- Figur 3b: einen Querschnitt durch die Misch- und Reaktionszone der Figur 3a,
- Figur 4: einen Längsschnitt durch einen Ventilstößel mit mikrostrukturierter. Ausgestaltung der Oberfläche mit einer vergrößerten Ansicht in Wandnähe,
- Figur 5a: einen Längsschnitt durch einen Ventilmischer mit schmalem ersten Eintrittsspalt und geschlossenem Rückschlagventil,
- Figur 5b: einen Längsschnitt durch den Ventilmischer aus Figur 5 a mit geöffnetem Rückschlagventil,
- Figur 5c: einen Längsschnitt durch einen Ventilmischer mit breitem ersten Eintrittsspalt und geschlossenem Rückschlagventil,
- Figur 5d: einen Längsschnitt durch den Ventilmischer aus Figur 5c mit geöffnetem Rückschlagventil,
- Figur 6a: einen erfindungsgemäßen Mikromischer mit Membrananordnung im Längsschnitt,
- Figur 6b: eine vergrößerte Ansicht des Mikromischers der Figur 6a im Umgebungsbereich der Misch- und Reaktionszone,
- Figur 6c: die Strömungsverläufe im Mikromischer der Figur 6b,
- Figur 6d: die Strömungsverläufe in der vergrößerten Ansicht der Figur 6b,
- Figur 7: einen erfindungsgemäßen Ventilmischer in Kombination mit einer weiteren Dosierstelle und einem beheizten Auslasskanal.
- Figur 8: einen Ventilmischer mit einem außen liegenden Rückschlagventil
- Figur 9: einen Ventilmischer mit einem außen liegenden und einem innen liegenden Rückschlagventil
- Figur 10: einen Ventilmischer mit einem innen liegenden und einem außen liegenden Rückschlagventil, welcher einen zusätzlichen Strömungskanal und Eintrittsspalt zur Zuführung eines weiteren Teilstroms ausgebildet hat.
- Figur 11: einen Ventilmischer für große Volumenströme, der als parallele Anordnung mehrerer identischer Ventilmischereinheiten in einem gemeinsamen Gehäuse mit gemeinsamer Zuführung der Teilströme sowie gemeinsamen, Abführung des Mischungsprodukts ausgebildet ist.

In der Figur 1a ist ein erfindungsgemäßer Ventilmischer im Längsschnitt dargestellt. Der Ventilmischer besteht aus einem Grundkörper 1, aus einem Mittelteil 2 und aus einem Deckel 3. Diese drei Bauelemente werden nach außen durch zwei O-Ringe 4, 5 abgedichtet. Dabei ist der erste O-Ring 4 zwischen dem Grundkörper 1 und dein Mittelteil 2 angeordnet, und der zweite O-Ring 5 befindet sich zwischen dem Mittelteil 2 und dem Deckel 3. Die beiden Teilströme 6, 7 treten von links und von rechts in den Grundkörper 1 ein. Sie sind jeweils durch horizontal verlaufende schwarze Pfeile angedeutet. Der erste Teilstrom 6 wird im linken Bereich des Grundkörpers 1 durch eine Bohrung nach oben geführt, die in einen Ringkanal 8 für den ersten Teilstrom 6 mündet. Aus dem Ringkanal 8 tritt der erste Teilstrom 6 knapp oberhalb eines Ventilstößels 9 in eine Misch- und Reaktionszone 10. Der zweite Teilstrom 7 wird zentral durch den Mikromischer geführt. Er umströmt den Ventilstößel 9 und wird über mehrere Bohrungen 12 der Unterseite des Kopfes des Ventilstößels 9 zugeleitet und gelangt von dort in die Misch- und Reaktionszone 10. Das Reaktionsgemisch, bestehend aus dem ersten Teilstrom 6 und dem zweiten Teilstrom 7, wird über einen Auslasskanal 11 abgeleitet. Der Ventilstößel 9, die Misch- und Reaktionszone 10 und der Auslasskanal 11 sind rotationssymmetrisch ausgeführt. Durch die Einstellung einer Spiralfeder 13, einer Mutter 14 und einer Kontermutter 15 wird die Kraft festgelegt, die erforderlich ist, um der Ventilstößel 9 nach oben zu verschieben. Diese Kraft muss aufgebracht werden durch die Druckdifferenz, die zwischen dem Druck in den Bohrungen 12 für den zweiten Teilstrom 7 und der Misch- und Reaktionszone 10 besteht. Durch diese Druckdifferenz wird der Ventilstößel 9 nach oben verschoben und gibt den Weg für den zweiten Teilstrom 7 in die Misch- und Reaktionszone 10 frei. Kommt es zu einem Druckabfall in den Bohrungen 12 oder steigt durch Ablagerungen und Verstopfungen in der Misch- und Reaktionszone 10 oder im Auslasskanal 11 der Druck stark an, so wird der Ventilstößel 9 nach unten gegen den Ventilkörper 17 gedrückt, und eine Rückströmung aus der Misch- und Reaktionszone 10 in den Zulaufbereich für den zweiten Teilstrom 7 verhindert. Der Mikromischer ist also mit einer Rückströmsperre für den zweiten Teilstrom 7 in der Form eines Rückschlagventils ausgestattet. Die Dichtwirkung lässt sich weiterhin dadurch verbessern, dass zwischen dem Ventilstößel 9 und dem Ventilkörper 17 eine Elastomerdichtung eingesetzt wird, die hier nicht abgebildet ist. Der Ventilkörper 17 wird durch einen dritten O-Ring 18 gegen den Grundkörper 1 abgedichtet, so dass eine Vermischung der beiden Teilströme 6, 7 außerhalb der Misch- und Reaktionszone 10 ausgeschlossen ist. Zwischen dem Ventilkörper 17 und dem Mittelteil 2 des Mikromischers befindet sich eine flache Abstandsscheibe 16, die in verschiedenen Stärken, bevorzugt in einer Dicke zwischen 20 und 5.000 µm, ausgeführt ist. Durch eine Variation der Scheibendicke der Abstandsscheibe 16 ändert sich die Breite des Spalts zwischen dem Ventilkörper 17 und dem Mittelteil 2, aus dem der erste Teilstrom 6 in die Misch- und Reaktionszone 10 einströmt.

Die Figur 1b stellt eine vergrößerte Ansicht auf die Umgebung der Misch- und Reaktionszone 10 des Mikromischers der Figur 1a dar. Die Führung der beiden Teilströme 6, 7 ist hier besonders deutlich zu erkennen. Der erste Teilstrom 6 gelangt aus dem Ringkanal 8 über einen ersten Eintrittsspalt 19, dessen Breite durch die Abstandsscheibe 16 bestimmt wird, in die Misch- und Reaktionszone 10. Durch die gleichförmige Dicke des ersten Eintrittsspalts 19 strömt der erste Teilstrom 6 als geschlossener Film aus dem Ventilkörper 17 aus. Dahinter trifft der erste Teilstrom 6 auf den ebenfalls als geschlossener und gleichförmiger Film austretenden zweiten Teilstrom 7. Der zweite Teilstrom 7 tritt aus' einem zweiten Eintrittsspalt 20 zwischen dem Ventilstößel 9 und dem Ventilkörper 17 aus. In der Folge strömen die beiden als Filme ausgebildeten Teilströme 6, 7 parallel zueinander durch die Misch- und Reaktionszone 10 zum Auslasskanal 11. Eine Verbesserung der Mischgüte wird erreicht, wenn die Abstandsscheibe 16 mikrostrukturiert ist.

Die Figuren 1c und 1d geben jeweils die Strömungsverläufe der Figuren 1a und 1b wieder. Auf Bezugszeichen wurde verzichtet. Die Strömungsverläufe sind jeweils durch die schwarzen Pfeile dargestellt.

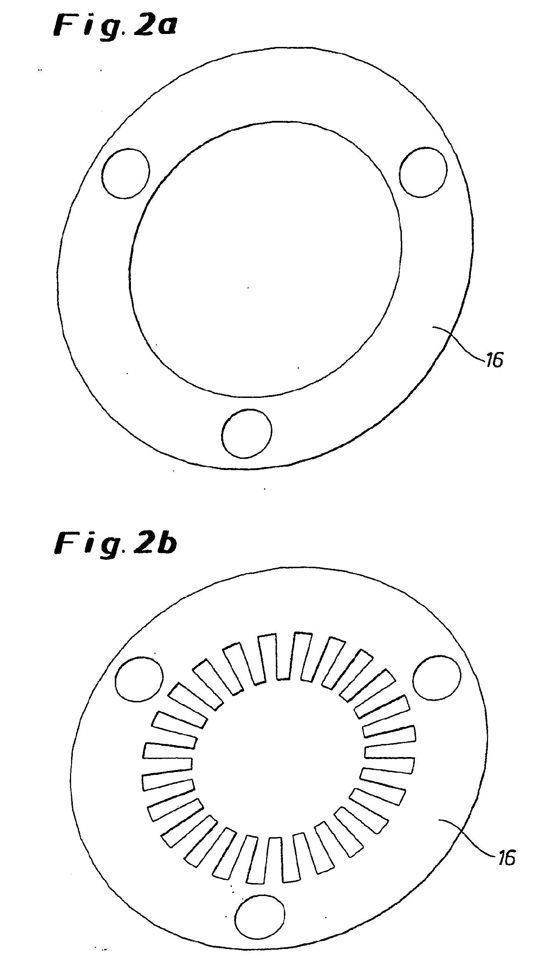

In den Figuren 2a und 2b sind jeweils Abstandsscheiben 16 dargestellt, wie sie zur Einstellung der Höhe des ersten Eintrittsspalts 19 zwischen dem Ventilkörper 17 und dem Mittelteil 2 für den ersten Teilstrom 6 verwendet werden. Die Abstandsscheibe 16 der Figur 2b unterscheidet sich von der in der Figur 2a dadurch, dass sie zusätzlich eine mikrostrukturierte Ausgestaltung im Bereich des ersten Eintrittsspalts 19 für den ersten Teilstrom 6 aufweist. Durch die Abstandsscheibe 16 in der Figur 2b kann eine Verbesserung der Vermischung der beiden Teilströme 6, 7 erzielt werden, da der geschlossene Film des ersten Teilstroms 6 in mehrere Einzelstrahlen zerlegt wird und die Geschwindigkeit dieser Einzelstrahlen am ersten Eintrittsspalt 19 deutlich erhöht wird, so dass die Strahlen in den zweiten Teilstrom 7 eindringen und von diesem umschlossen werden. Auf diese Weise werden die Vorteile der Mikrotechnik für die Erzeugung kleiner Fluidlamellen ausgenutzt, ohne dass es zu Ablagerungen und Verstopfungen der Mikrostrukturen kommt.

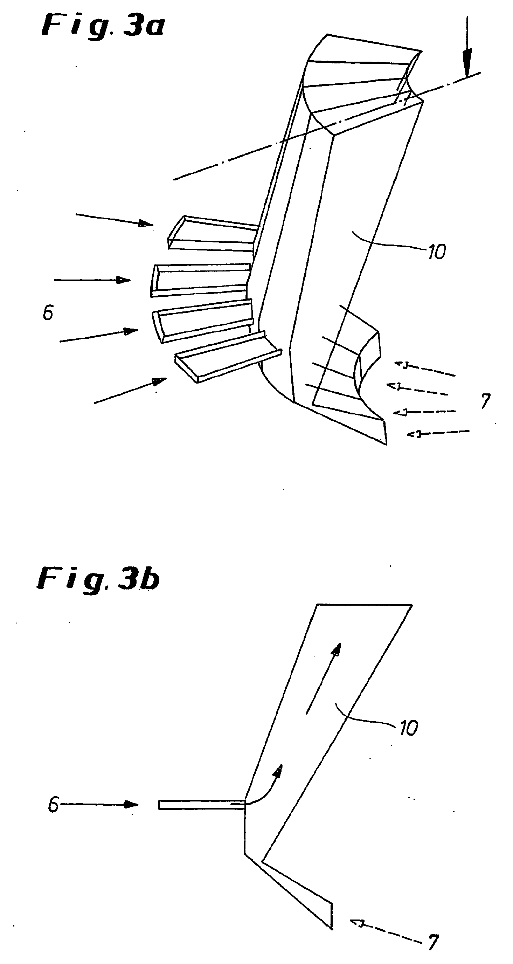

Die Figuren 3a und 3b stellen Strömungsverläufe in der Misch- und Reaktionszone 10 dar. Dabei ist die Figur 3a eine perspektivische Ansicht auf die Misch- und Reaktionszone 10, wobei eine Abstandsscheibe 16 gemäß der Figur 2b verwendet wurde. Der erste Teilstrom 6 ist durch die schwarzen Pfeile 6 angedeutet, und der zweite Teilstrom 7 ist durch weiße Pfeile dargestellt. Es ist zu erkennen, dass der erste Teilstrom 6 in mehrere Einzelstrahlen zerlegt worden ist, die vom zweiten Teilstrom 7 jeweils umschlossen werden. In der Figur 3b ist ein Querschnitt durch die Misch- und Reaktionszone 10 der Figur 3a mit dem entsprechenden Strömungsverlauf des ersten Teilstroms 6 und des zweiten Teilstroms 7 wiedergegeben.

Die Figur 4 stellt einen Ventilstößel 9 mit einer strukturierten Mikrooberfläche 21 dar. Die strukturierte Mikrooberfläche 21 ist eingekreist und rechts in einem Kreis vergrößert wiedergegeben. Durch die strukturierte Mikrooberfläche 21 wird der ansonsten als geschlossener Fluidfilm zwischen dem Ventilstößel 9 und dem Ventilkörper 17 aus dem zweiten Eintrittsspalt 20 austretende zweite Teilstrom 7 in mehrere Einzelstrahlen aufgeteilt. Die Strukturen der strukturierten Mikrooberfläche 21 sind vorzugsweise zwischen 50 und 3.000 µm hoch, und sie werden so in der Misch- und Reaktionszone 10 angeordnet, dass die Stege bei geschlossenem Ventilstößel 9 an die Wand anschließen, so dass der zweite Teilstrom 7 tatsächlich in separate Einzelstrahlen aufgeteilt wird. Auf diese Weise wird über den Strömungsquerschnitt des zweiten Teilstroms 7 gemessen ein Feld mit sehr hohen Geschwindigkeitsgradienten erzeugt. Dies begünstigt die Vermischung des ersten Teilstroms 6 mit dem zweiten Teilstrom 7.

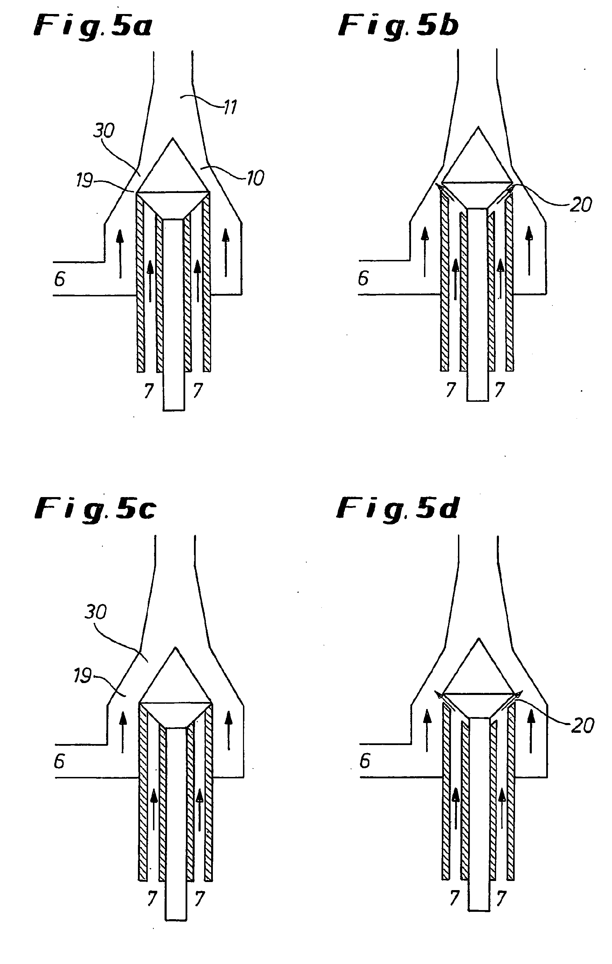

Die Figuren 5a bis 5d stellen jeweils einen Längsschnitt durch einen Mikromischer mit einem Rückschlagventil als Rückströmsperre dar. Die Figuren 5a und 5b zeigen einen Mikromischer mit schmalem ersten Eintrittsspalt 19. In der Figur 5a ist das Rückschlagventil geschlossen, und in der Figur 5b ist das Rückschlagventil geöffnet und gibt einen zweiten Eintrittsspalt 20 für den zweiten Teilstrom 7 frei. Die Figuren 5c und 5d stellen einen Mikromischer mit breitem ersten Eintrittsspalt 19 dar. In der Figur 5c ist das Rückschlagventil geschlossen, und in der Figur 5d ist das Rückschlagventil geöffnet und gibt einen zweiten Eintrittsspalt 20 für den zweiten Teilstrom 7 frei. Durch den schmalen ersten Eintrittsspalt 19 in der Figur 5b erfährt der erste Teilstrom 6 eine wesentlich höhere Geschwindigkeit als im Fall der Figur 5d mit breitem ersten Eintrittsspält 19. Über ein Gewinde oder eine vergleichbare externe Einrichtung lässt sich die Breite des ersten Eintrittsspalts 19 und somit auch die Breite des Spalts 30, in dem die beiden Teilströme 6, 7 zusammenlaufen, und der in seiner Verlängerung stromabwärts der Misch- und Reaktionszone entspricht, variieren.

In der Figur 6a ist ein erfindungsgemäßer Mikromischer mit einem Membrankörper 34 als Rückströmsperre im Längsschnitt zu sehen. In diesem Mikromischer werden drei Teilströme 6, 7, 37 miteinander vermischt. Auch dieser Mikromischer umfasst einen Grundkörper 1, ein Mittelteil 2 und einen Deckel 3. Der Deckel 3 besteht aus einer oberen und einer unteren Hälfte, und das Mittelteil 2 besteht ebenso aus einem oberen und einem unteren Teil. Der zweite und der dritte Teilstrom 7, 37 werden jeweils über eine Rückströmsperre in der Art eines Membrankörpers 34 zu der Misch- und Reaktionszone 10 geleitet. Für den Membrankörper 34 kommen verschiedene Materialien in Frage. Dabei kann über verschiedene Wanddicken des Membrankörpers 34 und unterschiedliche Elastizität des Materials die durch den Differenzdruck aufzubringende erforderliche Öffnungskraft eingestellt werden. Dies ist vergleichbar mit der Einstellung in dem Mikromischer der Figur 1a mit Rückschlagventil, die über die Spiralfeder 13, die Mutter 14 und die Kontermutter 15 erfolgt. In dieser Ausführungsform des Mikromischers mit Membrankörper 34 können dein ersten Teilstrom 6 entweder nur ein weiterer Teilstrom, oder aber zwei weitere Teilströme 7, 37 zugemischt werden. Ebenso ist denkbar, dass der erste Teilstrom 6 Partikel mit sich führt. Die Partikel können die. Mikrostruktur ungehindert durchdringen, da der Mikromischer Mindestabmessungen im Bereich zwischen 500 und 3.000 µm aufweist.

In der Figur 6b ist eine vergrößerte Ansicht der Figur 6a im Umgebungsbereich der Misch- und Reaktionszone 10 dargestellt.

Die Figuren 6c und 6d geben die Strömungsverläufe der Figuren 6a und 6b wieder. Auf Bezugszeichen wurde verzichtet.

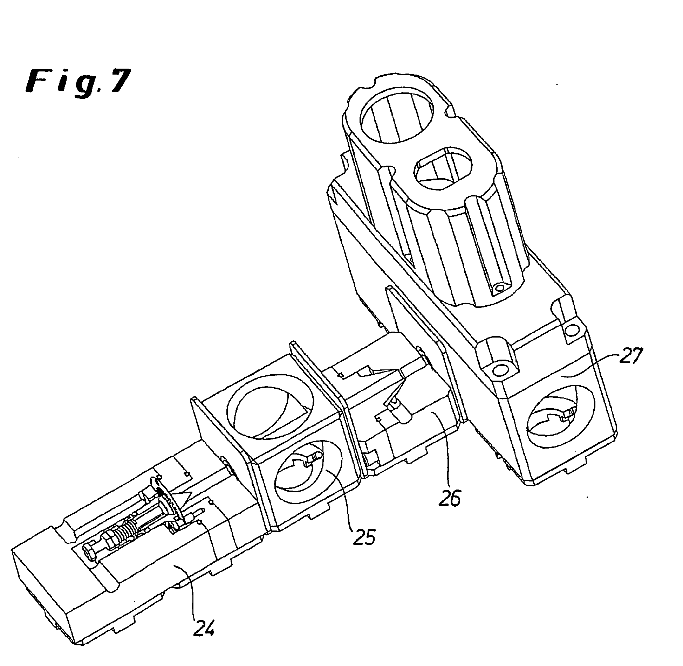

In der Figur 7 ist ein als Ventilmischer ausgebildetes Modul 24 dargestellt, das zusammen mit einer weiteren Dosierstelle 26 und einem elektrischen Heizmodul 27 zu einem integrierten Bauteil kombiniert ist. Zwischen dem als Ventilmischer ausgebildeten Modul 24 und der weiteren Dosierstelle 26 ist ein Isolationsmodul 25 zur thermischen Entkopplung dieser benachbarten Bauteile vorgesehen.

Figur 8 stellt eine vorteilhafte Ausführung des Ventilmischers mit ringförmig koaxialer Unordnung der Eintrittsspalte 19, 20 dar, bei dem die Rückströmsperre im Bereich des äußeren der beiden Eintrittsspalte ausgebildet ist. Die Rückstromsperre wird hierbei durch einen axial beweglichen Ventilring 41 realisiert, der durch eine Kolbendichtung 42 gegenüber dem Gehäuse 43 abgedichtet ist und durch eine verschließende Kraftwirkung 45 gegen die gegenüber liegende Kante des Eintrittsspalts 19 gepresst wird. Überschreitet die durch den Druck des ersten Teilstroms auf den Ventilring ausgeübte Kraft die verschließende Kraftwirkung 45, so öffnet sich der Eintrittsspalt 20 und der erste Teilstrom tritt in die Misch- und Reaktionszone 10 ein.

In Figur 9 ist eine weitere vorteilhafte Ausführung des Ventilmischers mit ringförmig koaxialer Anordnung der Eintrittsspalte 19, 20 dargestellt, bei der sowohl im Bereich des ersten als auch des zweiten Eintrittsspalts eine Rückstromsperre ausgebildet ist. Hierbei sind die Funktionsprinzipien der in den Figuren 5 und 8 dargestellten Ausführungen des Ventilmischers in vorteilhafter Weise miteinander kombiniert.

Figur 10 zeigt eine ebenfalls vorteilhafte Ausführungsform des Ventilmischers, die aus der in Figur 9 dargestellten Ausführungsform dadurch hervorgeht, dass der Misch- und Reaktionszone 10 ein dritter Teilstrom 37 durch einen weiteren ringförmigen Eintrittsspalt 38, der zwischen dem Eintrittsspalt für den ersten 19 und dem Eintrittsspalt 20 für den zweiten Teilstrom angeordnet ist zugeführt wird.

In Figur 11 ist eine parallele Anordnung mehrerer erfindungsgemäßer Ventilmischereinheiten in einem gemeinsamen Gehäuse (51-53) mit gemeinsamer Zuführung der Teilströme dargestellt, welche vorteilhaft für die Vermischung größerer Volumenströme eingesetzt werden kann. Die beiden Versörgungskanäle für den ersten (56) bzw. zweiten Teilstrom (57) sind in dieser Ausführung in zwei übereinander liegenden Ebenen angeordnet. Bei jeder der parallel betriebenen Ventilmischereinheiten ist der Öffnungsdruck des Rückschlagventils individuell variierbar, um ein einheitliches Volumenstromverhältnis der Teilströme an allen Mischereinheiten einstellen zu können. Das Mischungsprodukt verlässt die einzelnen Mischereinheiten in einen gemeinsamen Auslasskanal, welcher in direktem Anschluss oberhalb der in der Figur 11 dargestellten Baugruppe angeordnet ist.

### Bezugszeichenliste:

- 1: Grundkörper
- 2: Mittelteil
- 3: Deckel
- 4: erster O-Ring
- 5: zweiter O-Ring
- 6: erster Teilstrom
- 7.: zweiter Teilstrom
- 8: Ringkanal für den ersten Teilstroms
- 9: Ventilstößel
- 10: Misch-und Reaktionszone
- 11: Auslasskanal
- 12: Bohrungen im Ventilkörper für den zweiten Teilstrom
- 13: Spiralfeder
- 14: Mutter
- 15: Kontermutter
- 16: Abstandsscheibe
- 17: Ventilkörper
- 18 :: dritter Ö-Ring
- 19: Eintrittsspalt für den ersten Teilstrom
- 20: Eintrittsspalt für den zweiten Teilstrom
- 21: mikrostrukturierte Oberfläche des Ventilstößel
- 24: als Ventilmischer ausgebildetes Modul
- 25: Isolationsmodul zur thermischen Entkopplung benachbarter Bauteile
- 26: weitere Dosierstelle
- 27: elektrisches Heizmodul
- 30: Abstand
- 34: Membrankörper
- 37: dritter Teilstrom
- 38: Eintrittsspalt für dritten Teilstrom
- 40: Zentraler Konus
- 41: Ventilring
- 42: Kolbendichtung
- 43: Gehäuse
- 45: verschließende Kraftwirkung auf Ventilring
- 46: verschließende Kraftwirkung auf Ventilstößel
- 51: gemeinsamer Grundkörper
- 52: gemeinsamer Mittelteil
- 53: gemeinsame Auslassplatte
- 56: gemeinsamer Versorgungskanal für ersten Teilstrom
- 57: gemeinsamer Versorgungskanal für zweiten Teilstrom

## Patentansprüche

1. Mikromischer zum Vermischen von mindestens zwei unter Bildung von Ausfällungen oder Suspensionen reagierenden Fluiden mit einem ersten Kanal für die Zufuhr eines ersten Teilstroms (6) und mit einem zweiten Kanal für die Zufuhr eines zweiten Teilstroms (7), die in flachen Eintrittsspalten (19, 20) in eine Misch- und Reaktionszone (10) münden und die Misch- und Reaktionszone (10) über einen Auslasskanal (11) verlassen, wobei zwischen der Misch- und Reaktionszone (10) und mindestens einem Kanal für die Zufuhr eines Teilstroms (6, 7, 37) eine Rückströmsperre angeordnet ist, **dadurch gekennzeichnet, dass** das die Vorspannung der Rückströmsperre vorgebende Element in Strömungsrichtung vor dem Eintritt des an der Rückströmsperre vorbeiströmenden Teilstroms (6, 7, 37) in die Misch- und Reaktionszone (10) angeordnet ist.

2. Mikromischer nach Anspruch 1, **dadurch gekennzeichnet, dass** die Rückströmsperre als Rückschlagventil ausgebildet ist.

3. Mikromischer nach Anspruch 2, **dadurch gekennzeichnet, dass** die Vorspannung des Rückschlagventils mit mechanischen Mitteln (13, 14, 15) vorgegeben wird.

4. Mikromischer nach Anspruch 2, **dadurch gekennzeichnet, dass** das Rückschlagventil elektrisch, pneumatisch, hydraulisch oder elektromagnetisch ansteuerbar ist.

5. Mikromischer nach einem oder mehreren der Ansprüche 1 bis 4, **dadurch gekennzeichnet, dass** die Rückströmsperre als Membrananordnung ausgebildet ist.

6. Mikromischer nach einem oder mehreren der Ansprüche 1 bis 5, **dadurch gekennzeichnet, dass** die Rückströmsperre durch Reinigungsstifte, die bei jedem Öffnungs- und Schließvorgang in die von der Rückströmsperre freigegebenen Öffnung einfahren und im Wesentlichen nadelförmig ausgebildet sind, von Ablagerungen im laufenden Betrieb gereinigt wird.

7. Mikromischer nach einem oder mehreren der Ansprüche 1 bis 6, **dadurch gekennzeichnet, dass** Eintrittsspalten (19, 20) für die Teilströme (6, 7, 37) als schmale Ringspalten ausgebildet sind, so dass die Teilströme (6, 7, 37) als dünne Filmschichten aufeinander treffen.

8. Mikromischer nach einem oder mehreren der Ansprüche 1 bis 7, **dadurch gekennzeichnet, dass** die Eintrittsspalten (19, 20) durch mikrostrukturierte Bauelemente (16, 9) begrenzt werden, die eine Aufteilung der Teilströme (6, 7, 37) in einzelne Teilstrahlen herbeiführen.

9. Mikromischer einem oder mehreren der Ansprüche 1 bis 8, **dadurch gekennzeichnet, dass** der Auslasskanal (11) eine glatte und sich aufweitende Geometrie aufweist.

10. Mikromischer einem oder mehreren der Ansprüche 1 bis 9, **dadurch gekennzeichnet, dass** im Auslasskanal (11) eine Zuführung für einen Mantelstrahl vorgesehen ist, der die vermischten Teilströme (6, 7, 37) beim Auslassen umhüllt.

11. Mikromischer einem oder mehreren der Ansprüche 1 bis 10, **dadurch gekennzeichnet, dass** der Ansprechdruck und/oder das Öffnungsverhalten der Rückstromsperre, die Breite wenigstens eines der Einströmspalte (19, 20) und/oder eine charakteristische Dimension der Misch- und Reaktionszone (10) mit mechanischen, hydraulischen, pneumatischen, elektrischen oder elektromagnetischen Mittel von außen einstellbar sind und / oder als Stellgrößen eines äußeren oder inneren Regelkreises automatisch variiert werden.

12. Mikromischer einem oder mehreren der Ansprüche 1 bis 11, **dadurch gekennzeichnet, dass** zwei oder mehr erfindungsgemäße Ventilmischereinheiten in einem gemeinsamen Gehäuse mit gemeinsamer Zuführung der Teilströme (6, 7, 37) und gemeinsamem Auslasskanal (11) in einer Weise angeordnet sind, dass sie parallel betrieben werden können.

13. Verwendung des Mikromischers nach einem oder mehreren der Ansprüche 1 bis 12 für Fällungs-/ und/oder Kristallisationsreaktionen, die Herstellung von Nanopartikeln, Kohlenstoff-Nanoröhren, Fullerenen oder Partikeln / Nanopartikeln mit mehreren in konzentrischer Abfolge angeordneten Schichten aus unterschiedlichen Substanzen.

## Claims

1. Micromixer for mixing at least two fluids which react to form precipitates or suspensions, having a first channel for supplying a first sub-flow (6) and having a second channel for supplying a second sub-flow (7), which open in flat entry gaps (19, 20) into a mixing and reaction zone (10) and leave the mixing and reaction zone (10) via an outlet channel (11), a reflux barrier being arranged between the mixing and reaction zone (10) and at least one channel for supplying a sub-flow (6, 7, 37), **characterized in that** the element which defines the prestress of the reflux barrier is arranged in the flow direction in front of the entry of the sub-flow (6, 7, 37) which flows past the reflux barrier into the mixing and reaction zone (10).

2. Micromixer according to Claim 1, **characterized in that** the reflux barrier is designed as a non-return valve.

3. Micromixer according to Claim 2, **characterized in that** the prestress of the non-return valve is provided by mechanical means (13, 14, 15).

4. Micromixer according to Claim 2, **characterized in that** the non-return valve is electrically, pneumatically, hydraulically or electromagnetically drivable.

5. Micromixer according to one or more of Claims 1 to 4, **characterized in that** the non-return valve is designed as a membrane arrangement.

6. Micromixer according to one or more of Claims 1 to 5, **characterized in that** deposits are cleaned from the reflux barrier in the course of operation by cleaning pins, which insert into the opening uncovered by the reflux barrier during each opening and closing process and are essentially designed with a needle shape.

7. Micromixer according to one or more of Claims 1 to 6, **characterized in that** entry gaps (19, 20) for the sub-flows (6, 7, 37) are designed as narrow annular gaps, so that the sub-flows (6, 7, 37) meet each other as thin film layers.

8. Micromixer according to one or more of Claims 1 to 7, **characterized in that** the entry gaps (19, 20) are bounded by microstructured components (16, 9), which contribute to dividing the sub-flows (6, 7, 37) into individual sub-streams.

9. Micromixer one or more of Claims 1 to 8, **characterized in that** the outlet channel (11) has a smooth and widening geometry.

10. Micromixer one or more of Claims 1 to 9, **characterized in that** a feed for an envelope stream, which encloses the mixed sub-flows (6, 7, 37) when they emerge, is provided in the outlet channel (11).

11. Micromixer one or more of Claims 1 to 10, **characterized in that** the response pressure and/or the opening behaviour of the reflux barrier, the width of characteristic dimensions of the mixing and reaction characteristic dimensions of the mixing and reaction zone (10) are externally adjustable by mechanical, hydraulic, pneumatic, electrical or electromagnetic means and/or are automatically varied as control variables of an outer or inner control loop.

12. Micromixer one or more of Claims 1 to 11, **characterized in that** two or more valve mixer units according to the invention are arranged in a common housing with common supplies of the sub-flows (6, 7, 37) and a common outlet channel (11), so that they can be operated in parallel.

13. Use of the micromixer according to one or more of Claims 1 to 12 for precipitation and/or crystallization reactions, the preparation of nanoparticles, carbon nanotubes, fullerenes or particles/nanoparticles having a plurality of layers of different substances arranged in a concentric sequence.

## Revendications

1. Micromélangeur pour mélanger au moins deux fluides réagissant en formant des précipités ou des suspensions, avec un premier canal pour l'amenée d'un premier courant partiel (6) et avec un deuxième canal pour l'amenée d'un deuxième courant partiel (7), qui débouchent dans des fentes d'entrée plates (19, 20) dans une zone de mélange et de réaction (10) et qui quittent la zone de mélange et de réaction (10) par un canal de sortie (11), dans lequel une barrière anti-retour est disposée entre la zone de mélange et de réaction (10) et au moins un canal pour l'amenée d'un courant partiel (6, 7, 37), **caractérisé en ce que** l'élément prédéterminant la précontrainte de la barrière anti-retour est disposé dans la direction d'écoulement avant l'entrée dans la zone de mélange et de réaction (10) du courant partiel (6, 7, 37), qui contourne la barrière anti-retour.

2. Micromélangeur selon la revendication 1, **caractérisé en ce que** la barrière anti-retour est un clapet anti-retour.

3. Micromélangeur selon la revendication 2, **caractérisé en ce que** la précontrainte du clapet anti-retour est prédéterminée par des moyens mécaniques (13, 14, 15).

4. Micromélangeur selon la revendication 2, **caractérisé en ce que** le clapet anti-retour peut être commandé par voie électrique, pneumatique, hydraulique ou électromagnétique.

5. Micromélangeur selon une ou plusieurs des revendications 1 à 4, **caractérisé en ce que** la barrière anti-retour est formée par un dispositif de membrane.

6. Micromélangeur selon une ou plusieurs des revendications 1 à 5, **caractérisé en ce que** la barrière anti-retour est débarrassée des dépôts en fonctionnement courant au moyen de tiges de nettoyage, qui pénètrent dans l'ouverture libérée par la barrière anti-retour lors de chaque opération d'ouverture et de fermeture et qui sont réalisées essentiellement en forme d'aiguilles.

7. Micromélangeur selon une ou plusieurs des revendications 1 à 6, **caractérisé en ce que** les fentes d'entrée (19, 20) pour les courants partiels (6, 7, 37) sont des fentes annulaires étroites, de telle manière que les courants partiels (6, 7, 37) se rejoignent sous la forme de minces couches de films.

8. Micromélangeur selon une ou plusieurs des revendications 1 à 7, **caractérisé en ce que** les fentes d'entrée (19, 20) sont limitées par des composants microstructurés (16, 9), qui provoquent une division des courants partiels (6, 7, 37) en jets partiels individuels.

9. Micromélangeur selon une ou plusieurs des revendications 1 à 8, **caractérisé en ce que** le canal de sortie (11) présente une géométrie lisse et qui s'évase.

10. Micromélangeur selon une ou plusieurs des revendications 1 à 9, **caractérisé en ce qu'**il est prévu dans le canal de sortie (11) une arrivée pour un jet enveloppant, qui entoure les courants partiels mélangés (6, 7, 37).

11. Micromélangeur selon une ou plusieurs des revendications 1 à 10, **caractérisé en ce que** la pression de réponse et/ou le comportement d'ouverture de la barrière anti-retour, la largeur d'au moins une des fentes d'entrée (19, 20) et/ou une dimension caractéristique de la zone de mélange et de réaction (10) sont réglables de l'extérieur par des moyens mécaniques, hydrauliques, pneumatiques, électriques ou électromagnétiques et/ou sont modifiés automatiquement comme grandeurs de réglage d'un circuit de régulation extérieur ou intérieur.

12. Micromélangeur selon une ou plusieurs des revendications 1 à 11, **caractérisé en ce que** deux ou plusieurs unités de mélangeur à soupape selon l'invention sont disposées dans un corps commun avec une arrivée commune des courants partiels (6, 7, 37) et un canal de sortie commun (11), de telle manière qu'elles puissent fonctionner en parallèle.

13. Utilisation du micromélangeur selon une ou plusieurs des revendications 1 à 12 pour des réactions de précipitation et/ou de cristallisation, la production de nanoparticules, de nanotubes de carbone, de fullerènes ou de particules/nanoparticules comportant plusieurs couches de substances différentes se succédant de manière concentrique.
